Europäisches Patentamt

European Patent Office

Office européen des brevets

(11) Veröffentlichungsnummer: **0 482 329 A1**

## EUROPÄISCHE PATENTANMELDUNG

(21) Anmeldenummer: **91115053.0**

(22) Anmeldetag: **06.09.91**

(51) Int. Cl.5: **F15B  15/18**, F15B 7/00, F16K 31/124

(30) Priorität: **22.09.90 DE 4030107**

(43) Veröffentlichungstag der Anmeldung: **29.04.92 Patentblatt  92/18**

(84) Benannte Vertragsstaaten: **AT BE CH DE DK ES FR GB GR IT LI LU NL SE**

(71) Anmelder: **STEAG AG Bismarckstrasse 54 Postfach 10 37 62 W-4300 Essen 1(DE)**

(72) Erfinder: **Fink, Harald, Dipl.-Ing. Eickenhof 53 W-4220 Dinslaken(DE)**

(54) **Hydraulischer Stellantrieb für Steuer- und Regelarmaturen.**

(57) Der Stellantrieb hat einen hydraulischen Stellzylinder (6), dessen axial verschiebbarer Kolben (14) über eine Kolbenstange (17) mit dem Stellglied der zu steuernden Armatur verbunden ist. Eine erste Kammer (13) des Stellzylinders wird von einer Druckquelle (1) mit Hydraulikmedium versorgt. Der Druck des Hydraulikmediums wirkt der Kraft einer Federanordnung (7) entgegen, die aus einer Kombination mehrerer Schraubenfedern besteht und in einer zweiten Kammer (15) des Stellzylinders (6) angeordnet ist. Eine kompakte Anordnung der Funktionskomponenten des Stellantriebs ohne bruchgefährdete Hydraulikleitungen und aufwendige Servo- und Proportionalventile erreicht die Erfindung dadurch, daß als Druckquelle (1) eine Kombination aus einem drehzahlgeregelten Motor (2) und einer Konstantpumpe (1) vorgesehen ist, deren Förderstrom durch Drehzahländerung des Motors steuerbar ist, und daß das Hydraulikmedium aus der ersten Zylinderkammer (13) über einen das Hydraulikmedium druckabhängig drosselnden Strömungswiderstand (8) in die zweite Zylinderkammer (15) abführbar ist.

Fig. 1

EP 0 482 329 A1

Rank Xerox (UK) Business Services
(-/2.17/2.0)

Die Erfindung bezieht sich auf einen hydraulischen Stellantrieb für Steuer- und Regelarmaturen mit einem hydraulischen Stellzylinder, dessen axial verschiebbarer Kolben über eine Kolbenstange mit dem Stellglied der Armatur verbindbar ist, einer den Kolben in einer Axialrichtung federbelastenden Federanordnung und einer hydraulischen Druckquelle, die eine Zylinderkammer mit Hydraulikmedium versorgt und den Kolben entgegen der Kraft der Federanordnung druckbeaufschlagt.

Regelventile dieser Art dienen beispielsweise in Kraftwerken zum Regeln der Dampf-, Speisewasser- und Kondensatmassenströme. Vor allem im Turbinenbau werden die Stellantriebe mehrerer paralleler Regelarmaturen mit hydraulischer Energie von einem zentralen hydraulischen Versorgungssystem versorgt, das einen zentralen Hydraulikflüssigkeitsbehälter und mehrere gegen hydraulische Druckspeicher arbeitende Flüssigkeitspumpen enthält. Für die Verbindung jedes einzelnen Stellantriebes mit dem zentralen Versorgungssystem sind zwei Rohrleitungen erforderlich, und zwar eine zur Zuführung des unter hohem Druck stehenden Hydraulikmediums und die andere zur Entlastung der hydraulischen Komponenten und Rückführung des Hydraulikmediums. Derartige unter hohem Druck stehende Leitungen erfordern besondere Sicherungsmaßnahmen vor allem für die Fälle überhöhter Drücke und eines Leitungsbruchs.

Aus der DE-OS 30 19 602 ist elektrohydraulischer Stellantrieb der gattungsgemäßen Art bekannt, bei dem die mit der Übertragung hydraulischer Energie zusammenhängenden Probleme bereits dadurch eingeschränkt sind, daß alle hydraulischen Stellantriebskomponenten, einschließlich des elektrohydraulischen Umformers, des hydraulischen Stellzylinders und des hydraulischen Versorgungssystems zu einem am Gehäuse der zu regelnden Armatur angeordneten Antriebsblock integriert sind.

Alle gattungsgleichen oder -ähnlichen bekannten Stellantriebe arbeiten entweder mit Servo- oder Proportionalventilen zur Regelung des Durchflusses des Hydraulikmediums im System. Derartige Ventile sind im Dauerbetrieb sehr störanfällig und leisten einen erheblichen Beitrag zu dem herstellungsmäßigen und betrieblichen Gesamtkostenaufwand.

Der Erfindung liegt die Aufgabe zugrunde, den Stellantrieb der gattungsgemäßen Art so auszubilden, daß besonders störanfällige hydraulische Komponenten, insbesondere Servo- und Proportionalventile vermieden sind und eine zuverlässige Funktionsweise gewährleistet ist.

Gelöst wird diese Aufgabe erfindungsgemäß dadurch, daß der Förderstrom der Druckquelle steuerbar ist und daß das Hydraulikmedium aus der Zylinderkammer über einen das Hydraulikmedium druckabhängig drosselnden Strömungswiderstand abführbar ist.

Die erfindungsnotwendigen hydraulischen Komponenten sind daher beschränkt auf eine drehzahlveränderbare Pumpe als Druckquelle, den hydraulischen Stellzylinder und einen Sammelbehälter bzw. eine Rückführleitung für das durch den Strömungswiderstand austretende Hydraulikmedium. Diese wenigen mit Hydraulikmedium in Berührung kommenden Komponenten sind mit relativ geringem Aufwand weitgehend störungssicher und damit für den Dauerbetrieb geeignet zu gestalten. Insbesondere ist der so aufgebaute Stellantrieb geeignet für eine integrierte Kompaktbauweise, bei der die einzelnen Komponenten modulartig zusammengeschlossen sind. Servo- oder Proportionalventile gibt es nicht.

Bei einem bevorzugten Ausführungsbeispiel der Erfindung ist der Strömungswiderstand in einem den Kolben durchdringenden Kanal ausgebildet, der die druckbeaufschlagte Zylinderkammer mit einer die Federanordnung aufnehmenden zweiten Zylinderkammer verbindet. Die Druckquelle ist dabei bevorzugt als Förderpumpe ausgebildet, deren Druckseite mit der ersten Zylinderkammer und deren Saugseite mit der zweiten Zylinderkammer verbunden ist.

In bevorzugter Weiterbildung der Erfindung besteht die Druckquelle aus einer Kombination aus einer Förderpumpe und einem diese antreibenden drehzahlgeregelten Elektromotor. Drehzahlregelbare Elektromotoren sind heutzutage mit relativ geringem Kostenaufwand herstellbar; sie lassen sich außerordentlich feinfühlig über große Regelbereiche drehzahlverändern. In Zuordnung zu derartigen drehzahlgeregelten Motoren kann jede Konstantpumpe geeigneter Leistung und Zuverlässigkeit, so beispielsweise eine Zahnradpumpe, zum Einsatz kommen.

Der Elektromotor ist bei einem bevorzugten Ausführungsbeispiel in einen Regelkreis eingebunden, dessen Meßwertaufnehmer ein die Kolbenstangenposition abtastender Stellungsmelder ist.

Für die Drehzahlregelung des aus Motor und Pumpe bestehenden Aggregats ist ein großer verfügbarer Drehzahlbereich und ein dementsprechender Änderungsbereich für das Fördervolumen der Pumpe anzustreben. Das Fördervolumen hängt von der Druckdifferenz auf beiden Seiten des Strömungswiderstands - im praktischen Ausführungsbeispiel also in den beiden Zylinderkammern ab. Für die Variation dieser Druckdifferenz ist die Federkraft der Federanordnung maßgeblich, da die anderen Kräfte im wesentlichen konstant bleiben. Die Erfindung strebt daher eine möglichst kompakte Federanordnung an, die eine große Federkraft an den Kolben anlegt. Dieser zusätzliche betriebliche Vorteile eines großen Stellbereichs läßt sich in bevorzugter Weiterbildung der Erfindung dadurch erreichen, daß die Federanordnung aus mehreren parallel geschalteten Schraubenfedern besteht. Schraubenfedern entfalten trotz ihrer geringen Baugröße relativ hohe Federkräfte. Eine besonders kompakte Bauform läßt sich dadurch erreichen, daß die Schraubenfedern konzentrisch auf der Zylinderachse angeordnet, vorzugsweise mit gegenseitigem radialen Abstand ineinandergesteckt sind.

Generell können die Schraubenfedern sowohl als Zugfedern als auch als Druckfedern ausgebildet sein. Als Druckfedern ist jedoch eine noch kompaktere Bauform möglich. In der Ausführungsform der Schraubenfedern als Druckfedern sind alle Federn vorzugsweise in der zweiten Zylinderkammer angeordnet, greifen am Kolben an und haben ein Widerlager an einem zylinderfesten Teil, insbesondere einem lösbaren Zylinderdeckel.

Ein Membranspeicher, der vorzugsweise mit der zweiten Zylinderkammer verbunden ist, dient zum Ausgleich der Volumenänderung durch Temperaturdifferenzen sowie der Volumendifferenzen zwischen den beiden Zylinderkammern während des gesamten Kolbenhubes.

In bevorzugter Ausführungsform ist im Leitungsweg zwischen Zylinderkammer und Druckquelle ein Rückschlagventil angeordnet, das den Leitungsweg entgegen der Förderstromrichtung verschließt und dadurch im Falle eines Pumpenausfalls oder einer Stromunterbrechung die Pumpe gegen Drehen in der falschen Richtung sichert.

Gegen Überdruck kann der erfindungsgemäße Stellantrieb in einfacher Weise dadurch gesichert werden, daß ein Druckbegrenzer mit der Druckleitung der Druckquelle verbunden ist.

Vorzugsweise wird der Kolben in der Endphase seines Hubes bedämpft. Dies geschieht in bevorzugter Ausführungsform der Erfindung dadurch, daß der Stoßdämpfer durch einen als Tauchkolben wirkenden Dorn und eine dem Kolben zugeordnete koaxiale Bohrung gebildet ist, in die der Dorn mit einem vorgegebenen, vorzugsweise ringförmigen Drosselspalt eintaucht.

Weitere Einzelheiten und Vorteile der Erfindung ergeben sich aus der nachfolgenden Beschreibung eines in der Zeichnung dargestellten Ausführungsbeispiels. In der Zeichnung zeigen:

Fig. 1    ein Schaltbild mit den bei dem beschriebenen Ausführungsbeispiel vorgesehenen hydraulischen, mechanischen und elektrischen Funktionskomponenten;

Fig. 2    eine teilweise geschnittene bzw. mit weggebrochenen Teilen dargestellte Seitenansicht eines Ausführungsbeispiels des neuen Stellantriebs;

Fig. 3    eine Draufsicht auf den Stellantrieb gemäß Fig. 2; und

Fig. 4    eine Schnittansicht entsprechend der Schnittlinie A-B in Fig. 2.

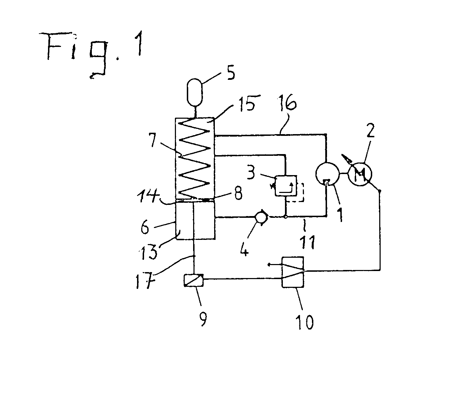

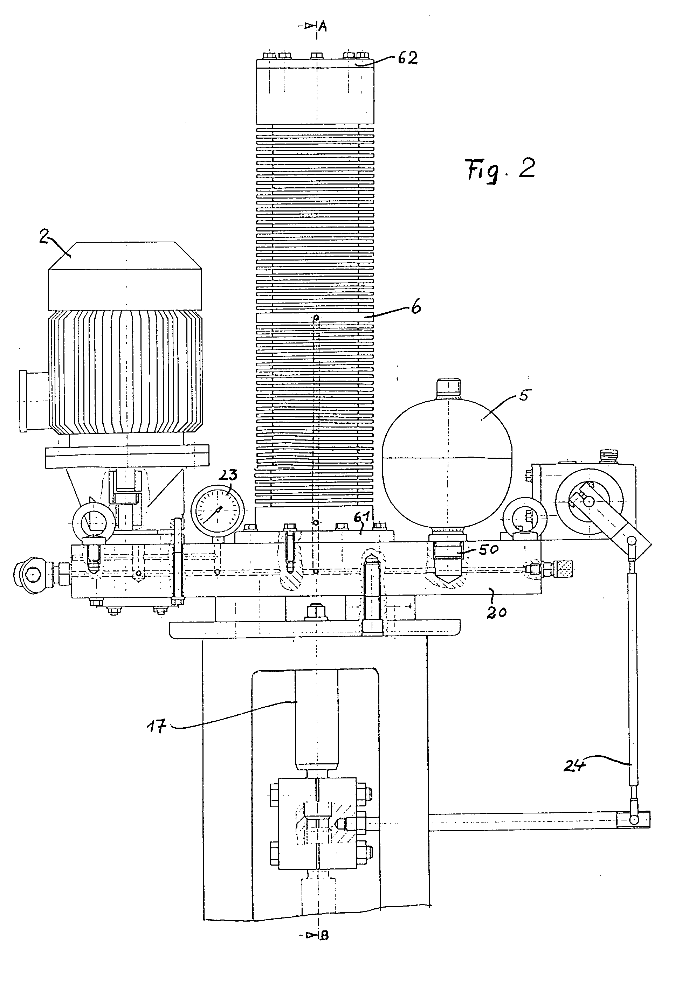

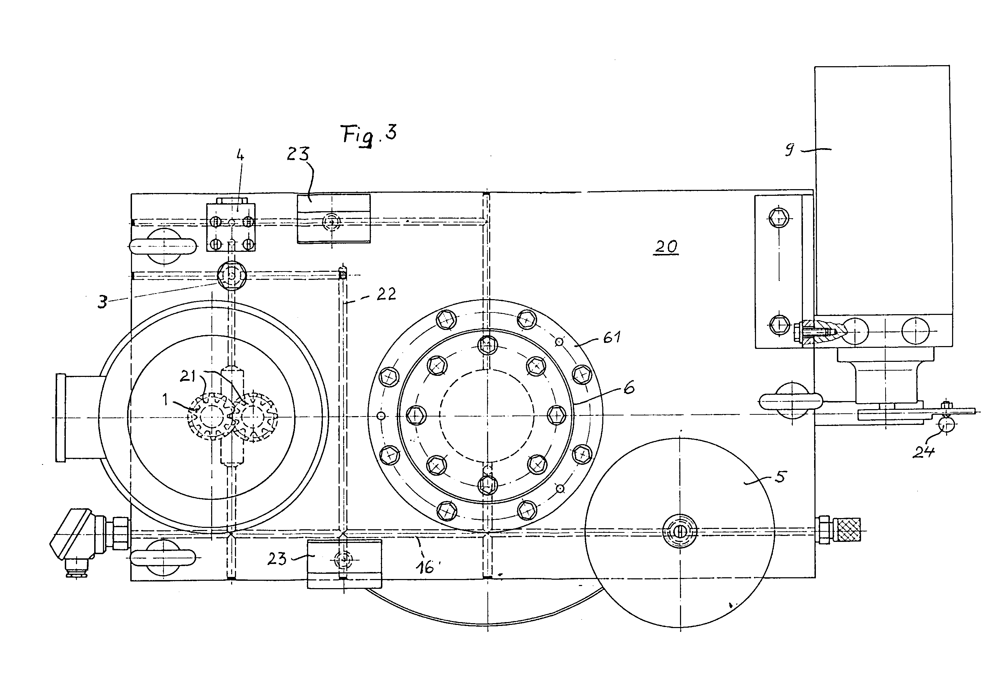

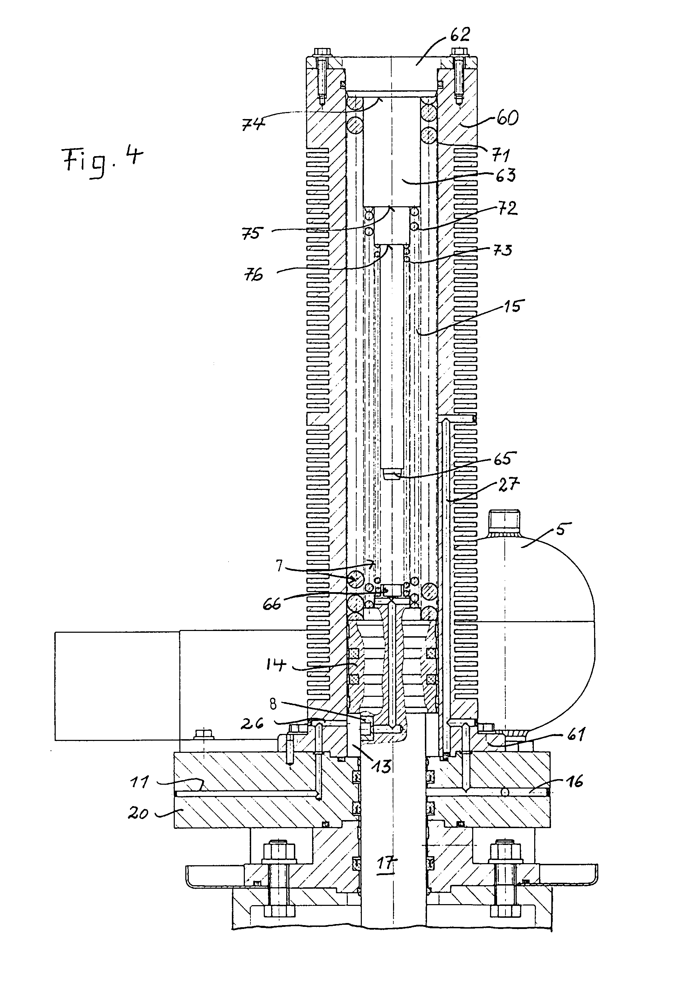

Gemäß Schaltbild in Fig. 1 weist der neue hydraulische Stellantrieb die folgenden Funktionskomponenten auf: Eine Konstantpumpe 1, einen drehzahlgeregelten Motor 2, ein Druckbegrenzungsventil 3, ein Rückschlagventil 4, einen Ausgleichspeicher 5, einen Stellzylinder 6, eine Federanordnung 7, einen als Drossel wirkenden Strömungswiderstand 8, einen Stellungsmelder 9 und einen Regler 10, über dessen zweiten Anschluß der Sollwert für die in der Zeichnung nicht dargestellte Regelarmatur eingegeben wird.

Die drehzahlveränderbare Pumpe 1 dreht in einer Richtung und drückt Hydraulikmedium über eine Druckleitung 11 und das in Förderrichtung offene Rückschlagventil 4 in eine erste Zylinderkammer 13 und saugt das durch den Strömungswiderstand 8 im Kolben 14 des Stellzylinders 6 gedrosselt abfließende Hydraulikmedium aus der zweiten Zylinderkammer 15 über eine Saugleitung 16 an. Die Änderung der Federkraft zwischen den beiden extremen Kolbenpositionen bestimmt die Größe des Drehzahlbereichs. Bei linearer Kennlinie der Federanordnung 7 ist der nutzbare Drehzahlbereich proportional zur maximalen Federkraft. Zu jeder Kolbenposition gehört entsprechend der Federkennlinie eine bestimmte Federkraft, der ein in der Zylinderkammer 13 herrschender, durch das Fördervolumen der Pumpe 1 aufgebrachter Druck entgegenwirkt. Je höher der Druck in der ersten Zylinderkammer 13 ist, desto größer ist das Druckgefälle über den Strömungswiderstand 8 und damit der Leckstrom von der ersten 13 zur zweiten Zylinderkammer 15. In jeder Position des Kolbens ist daher der Leckstrom über den Strömungswiderstand 8 und damit auch die Fördermenge der Pumpe 1 unterschiedlich. Das Druckbegrenzungsventil 3 sichert die Druckseite (Leitung 11) des Hydraulikkreises gegen Überdrücke. Bei einem Pumpenausfall oder einer Unterbrechung des elektrischen Stroms sorgt das Rückschlagventil 4 für eine Unterbrechung der Leitung 11 und verhindert dadurch ein Drehen der Pumpe 1 in der falschen Richtung. Der Druck in der Zylinderkammer 13 kann sich über den Strömungswiderstand 8 in die saugseitige zweite Zylinderkammer 15 abbauen, wobei der Kolben 14 und die zugehörige Kolbenstange 17 durch die Federkraft der Federanordnung 7 in die ausgerückte Stellung gedrängt werden. Speicher 5, der in dem beschriebenen Beispiel mit der zweiten Zylinderkammer 15 verbunden ist, dient zum Ausgleich der Volumenänderung durch Temperaturdifferenzen und Volumendifferenzen zwischen den beiden Zylinderkammern während des gesamten Hubes des Kolbens 14.

Wie in Ansichten gemäß Fig. 2 und 3 zu sehen ist, sind alle Funktionselemente des beschriebenen Stellantriebs in oder an einem Trägerblock 20 befestigt. Die beiden Zahnräder 21 der Zahnradpumpe 1 sind in Bohrungen des Blocks gelagert. Alle Hydraulikleitungen verlaufen in entsprechender Kanälen im Trägerblock 20 bzw. setzen sich über eine geeignete Dichtung (O-Ringe) direkt in die Gehäuse der angeschlossenen Komponenten fort. Die Gefahr eines Hydraulikleitungsbruches ist daher minimiert. Der Druckbegrenzer 3 ist direkt mit der Druckleitung 11 verbunden und bewirkt den Druckausgleich über im Trägerblock 20 ausgebildete Kanäle 22 (Fig. 3), die zur Saugleitung 16 führen. Unmittelbar an den Trägerblock 20 sind Manometer 23 angeschlossen. Rückschlagventil 4, Ausgleichsspeicher 5, Stellzylinder 6, Stellungsmelder 9 und drehzahlveränderlicher Motor 2 sind vorzugsweise lösbar am Trägerblock 20 angebracht. Der Ausgleichsspeicher 5 ist, wie Figur 2 zeigt, über einen geeigneten Anschlußstutzen 50 in eine Bohrung im Trägerblock 20 eingeschraubt. Der Positionsabgriff des Stellungsmelders 9 von der Kolbenstange 17 erfolgt mittels eines Kniehebelmechanismus' 24.

Figur 4 zeigt einen Axialschnitt durch den Stellzylinder 6. Der Stellzylinder 6 weist ein Zylindergehäuse 60 mit einem angeformten Anschlußflansch 61 zum Anschluß an den Trägerblock 20 und einen das freie Ende des Zylinders 6 verschließenden Deckel 62 auf. An die Innenseite des Deckels 62 ist ein Führungszapfen 63 mit gestuft abnehmenden Zylinderquerschnitten angeformt. Der Kolben 14 ist in Figur 4 in der ausgefahrenen (abgesenkten) Endposition gezeigt, in die er von der Federanordnung 7 gedrängt wird. Die vom Hydraulikmedium beaufschlagte erste Zylinderkammer 13 ist auf der Seite der Kolbenstange 17. Sie wird aus der Druckleitung 11 (im Trägerblock 20) und eine mit dieser verbundenen Radialbohrung 26 mit Hydraulikmedium versorgt. Der Strömungswiderstand wird durch einen den Kolben 14 axial durchsetzenden Kanal 8 gebildet, der jeweils über Radialbohrungen mit den ersten und zweiten Zylinderkammern 13 und 15 in Verbindung steht. Die im Trägerblock 20 verlaufende Saugleitung 16 steht über achsparallele und radiale Kanäle 27 mit der zweiten Zylinderkammer 15 in Verbindung.

Wie in Figur 4 zu erkennen ist, ist die Federanordnung 7 eine Kombination aus drei zueinander parallelgeschalteten, konzentrisch ineinander geschachtelten Schraubenfedern 71, 72 und 73. Durch diese Parallelschaltung von mehreren auf engstem Raum in der zweiten Zylinderkammer 15 zusammmegestellten Schraubenfedern kann eine hohe maximale Federkraft auf den Kolben 14 wirksam gemacht werden. Jede der drei mit geringem gegenseitigen Abstand angeordneten Federn 71, 72 und 73 ist zwischen einer Ringschulter am Kolben 14 einerseits und einer am Deckel 62 bzw. am gestuften Zapfen 63 gebildeten Ringschulter 74, 75 bzw. 76 andererseits eingespannt. Die jeweiligen Federenden werden einerseits an den gestuften Zylinderabschnitten des axialen Zapfens 63 und andererseits an den ebenfalls gestuften Zylinderabschnitten am Kolben 14 geführt und zentriert gehalten. Bei einem von der Anmelderin realisierten Prototypen, bei dem der Innendruchmesser des Stellzylinders 80 mm betrug, wurden die folgenden geeigneten Federdimensionen ermittelt:
Feder 71
mittlerer Windungsdurchmesser = Dm1 = 63mm
Drahtdurchmesser d1 = 14mm
Länge entspannt = L01 = 472,42mm
kleinste Federlänge Ln1 = 352,42 mm
Feder 72
Dm2 = 39 mm
d2 = 8 mm
L02 = 367,67 mm
Ln2 = 247,67 mm
Feder 73
Dm3 = 25 mm
D3 = 5 mm
LO3 = 326,22 mm
Ln3 = 206,22 mm.

Alle Federn der Federanordnung 7 sollten entweder durch eine Hülse von außen oder einen Dorn von innen geführt sein, und zwar über eine möglichst große Länge, damit die Knicksicherheit der Feder gewährleistet ist. Der relativ lange Zapfen 63führt die innere Feder 73 und die Innenwand des Zylinders 6 führt die äußere Feder 71. Die Führung der mittleren Feder 72 läßt sich vor allem dadurch über die volle Länge sicherstellen, daß sie (72) eine den beiden innen und außen benachbarten Federn 73 und 71 entgegengesetzte Gangrichtung (linksgängig gegenüber rechtsgängig) hat.

Zum gedämpften Abfangen des unter dem Druck des Hydraulikmediums in der ersten Zylinderkammer 13 stehenden Kolbens 14 vor Erreichen der oberen Kolbenendposition dient ein Stoßdämpfer, der einerseits aus einem zylindrischen Endabschnitt 65 des Zapfens 63 und andererseits aus einer axialen Bohrung 66 auf der Stirnseite des Kolbens 14 besteht. Der Innendurchmesser der Bohrung 66 ist etwas größer als der Außendurchmesser des zylindrischen Abschnitts des Dorns 65. Beim Eintauchen des Dorns 65 in die Bohrung 66 entsteht daher ein Drosselspalt, der die gewünschte Dämpfungswirkung entfaltet.

Im Rahmen des Erfindungsgedankens sind zahlreiche Abwandlungen möglich. So kann die Federanordnung 7 auf der Kolbenstangenseite entweder als Druckfeder oder als Zugfeder unter Angriff an einem entsprechenden Bund der Kolbenstange 17 angeordnet sein. Die druckbeaufschlagte Kammer 13 kann dementsprechend auch auf der Stirnseite des Kolbens 14 vorgesehen sein. Der als Drossel wirkende Strömungswiderstand 8 kann aus mehreren parallelen Kanälen bestehen und/oder durch einen einstellbaren Widerstand gebildet sein. Das geschlossene Hydrauliksystem mit direkter Rückführung des in die zweite Zylinderkammer 15 durch die Drossel 8 eintretenden Hydraulikmediums durch die Saugleitung 16 zur Pumpe 1 kann auch indirekt über einen Hydraulikflüssigkeitsbehälter rückgeführt werden. Die dargestellte direkte Rückführung des Hydraulikmediums hat jedoch den Vorteil einer kompakteren Ausführung; dabei sind, alle Hydraulikmedium führenden Leitungen im Trägerblock 20 bzw. Zylinderblock 60 eingeschlossen.

**Patentansprüche**

1. Hydraulischer Stellantrieb für Steuer- und Regelarmaturen mit einem hydraulischen Stellzylinder, dessen axial verschiebbarer Kolben über eine Kolbenstange mit dem Stellglied der Armatur verbindbar ist, einer den Kolben in einer Axialrichtung federbelastenden Federanordnung und einer hydraulischen Druckquelle, die eine Zylinderkammer mit Hydraulikmedium versorgt und den Kolben entgegen der Kraft der Federanordnung druckbeaufschlagt,
   **dadurch gekennzeichnet,**
   daß die Druckquelle (1) so ausgebildet ist, daß ihr Förderstrom steuerbar ist, und
   daß das Hydraulikmedium aus der Zylinderkammer (13) über einen das Hydraulikmedium druckabhängig drosselnden Strömungswiderstand (8) abführbar ist.

2. Stellantrieb nach Anspruch 1, dadurch gekennzeichnet, daß der Strömungswiderstand (8) in einem den Kolben (14) durchdringenden Kanal ausgebildet ist, der die druckbeaufschlagte Zylinderkammer (13) mit einer die Federanordnung (7) aufnehmenden zweiten Zylinderkammer (15) verbindet.

3. Stellantrieb nach Anspruch 2, dadurch gekennzeichnet, daß die Druckquelle als Förderpumpe (1) ausgebildet ist, deren Druckseite mit der ersten Zylinderkammer (13) und deren Saugseite mit der zweiten Zylinderkammer (15) verbunden ist.

4. Stellantrieb nach einem der Ansprüche 1 bis 3, dadurch gekennzeichnet, daß die Druckquelle aus einer Kombination aus einer Förderpumpe (1) und einem diese antreibenden drehzahlgeregelten Elektromotor (2) besteht.

5. Stellantrieb nach Anspruch 4, dadurch gekennzeichnet, daß der Elektromotor (2) in einen Regelkreis ( 9, 10, 2, 1, 6) eingebunden ist, dessen Meßwertaufnehmer ein die Kolbenstangenposition abtastender Stellungsmelder (9) ist.

6. Stellantrieb nach einem der Ansprüche 1 bis 5, dadurch gekennzeichnet, daß die Federanordnung (7) aus mehreren parallel geschalteten Schraubenfedern (71, 72, 73) besteht.

7. Stellantrieb nach Anspruch 6, dadurch gekennzeichnet, daß die Schraubenfedern (71, 72, 73) konzentrisch auf der Zylinderachse angeordnet sind.

8. Stellantrieb nach Anspruch 7, dadurch gekennzeichnet, daß die Schraubenfedern (71, 72, 73) mit radialem Abstand ineinandergesteckt angeordnet sind.

9. Stellantrieb nach Anspruch 7 oder 8, dadurch gekennzeichnet, daß die Schraubenfedern Druckfedern (71, 72, 73) sind, die in der zweiten Zylinderkammer (15) angeordnet sind, am Kolben (14) angreifen und ein Widerlager (74, 75, 76) an einem zylinderfesten Teil, insbesondere einem lösbaren Zylinderdeckel (62) haben.

10. Stellantrieb nach einem der Ansprüche 1 bis 9, dadurch gekennzeichnet, daß im Leitungsweg (11) zwischen Zylinderkammer (13) und Druckquelle (1) ein Rückschlagventil (4) angeordnet ist, das den Leitungsweg entgegen der Förderstromrichtung verschließt.

11. Stellantrieb nach einem der Ansprüche 1 bis 10, dadurch gekennzeichnet, daß ein Druckbegrenzer (3) mit der Druckleitung (11) der Druckquelle (1) verbunden ist.

12. Stellantrieb nach den Ansprüchen 2 und 11, dadurch gekennzeichnet, daß der Druckbegrenzer (3) in einem Verbindungskanal (22) zwischen den beiden Zylinderkammern (13, 15) wirksam ist.

13. Stellantrieb nach einem der Ansprüche 2 bis 12, dadurch gekennzeichnet, daß die zweite Zylinderkammer (15) mit einem Speicherbehälter (5) verbunden ist.

14. Stellantrieb nach einem der Ansprüche 1 bis 13, dadurch gekennzeichnet, daß ein in einer Endphase des Kolbenhubes wirksamer Stoßdämpfer (65, 66) vorgesehen ist.

15. Stellantrieb nach Anspruch 14, dadurch gekennzeichnet, daß der Stoßdämpfer durch einen als Tauchkolben wirkenden Dorn (65) und eine koaxiale Bohrung (66) gebildet ist, in die der Dorn mit einem vorgegebenen Drosselspalt eintaucht.

Fig. 1

Fig. 2

Fig. 3

EP 0 482 329 A1

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 081 703 (BOSCH) <br> * das ganze Dokument * * <br> — — — | 1-4 | F 15 B 15/18 <br> F 15 B 7/00 <br> F 16 K 31/124 |
| A | MACHINE DESIGN. Bd. 59, Nr. 18, , CLEVELAND US Seite 52; 'local actuators replace major systems' <br> * Seite 52 * * <br> — — — | 5,13 | |
| A | DE-A-3 742 221 (BOSCH) <br> * Spalte 2, Zeile 40 - Zeile 46 * * <br> — — — | 6-9 | |
| P,A | GB-A-2 230 876 (HOWDEN) <br> * das ganze Dokument * * <br> — — — | 11 | |
| A | US-A-3 459 131 (SENF) <br> — — — | | |
| A | US-A-4 630 441 (CHAMBERLAIN) <br> — — — — — | | |

|  | RECHERCHIERTE SACHGEBIETE (Int. Cl.5) |
|---|---|
| | F 15 B <br> F 16 K |

Der vorliegende Recherchenbericht wurde für alle Patentansprüche erstellt

| Recherchenort | Abschlußdatum der Recherche | Prüfer |
|---|---|---|
| Den Haag | 21 Januar 92 | KNOPS J. |